# EUROPÄISCHE PATENTSCHRIFT

(11) **EP 4 125 330 B1**
(45) Veröffentlichungstag und Bekanntmachung des Hinweises auf die Patenterteilung: **13.03.2024**
(21) Anmeldenummer: 22702726.5
(22) Anmeldetag: 31.01.2022
(51) Int. Cl.: A01G 9/24

(54) **LEUCHTE, VORRICHTUNG UND VERFAHREN ZUR PFLANZENAUFZUCHT**
LIGHT, APPARATUS AND METHOD FOR GROWING PLANTS
LAMPE, APPAREIL ET PROCÉDÉ DE CULTURE DE PLANTES

(30) Priorität: 24.03.2021 DE 102021202877
(43) Veröffentlichungstag der Anmeldung: 08.02.2023
(73) Patentinhaber: Würth Elektronik eiSos GmbH & Co. KG, 74638 Waldenburg (DE)
(72) Erfinder: ANDREEV, Zhelio, 74523 Schwäbisch Hall (DE); ÖZGÜR, Harun, 74081 Heilbronn (DE); RICHTER, Klaus, 74232 Abstatt (DE)
(74) Vertreter: Rau, Schneck & Hübner Patentanwälte Rechtsanwälte PartGmbB
(86) Internationale Anmeldenummer: PCT/EP2022/052174
(87) Internationale Veröffentlichungsnummer: WO 2022/199910

(56) Entgegenhaltungen:
- CN-U- 206 637 333
- CN-U- 207 995 713
- CN-U- 209 234 364
- US-B1- 6 688 759
- US-B1- 10 667 468
- US-B1- 10 842 082

## Beschreibung

Die Erfindung betrifft eine Leuchte und eine Vorrichtung für die Pflanzenaufzucht. Die Erfindung betrifft zudem ein Verfahren zur Pflanzenaufzucht.

Aus dem Stand der Technik sind Leuchten für die Pflanzenaufzucht bekannt. In US 10 667 468 B1, US 10 842 082 B1 und CN 207 995 713 U sind Leuchten für die Pflanzenaufzucht beschrieben.

Es ist eine Aufgabe der vorliegenden Erfindung, eine Leuchte für die Pflanzenaufzucht zu verbessern, insbesondere eine Leuchte anzugeben, die eine effiziente Beleuchtung einer aufzuziehenden Pflanze ermöglicht.

Diese Aufgabe ist gelöst durch eine Leuchte gemäß Anspruch 1. Die Leuchte weist mindestens eine Lichtquelle zur Erzeugung von Licht für die Aufzucht mindestens einer aufzuziehenden Pflanze und mindestens eine Erfassungseinrichtung zur Erfassung mindestens eines Zustandsparameters der mindestens einen aufzuziehenden Pflanze auf. Zudem weist die Leuchte mindestens eine Verstelleinrichtung zur Verlagerung der mindestens einen Lichtquelle relativ zu der mindestens einen aufzuziehenden Pflanze in Abhängigkeit von dem durch die mindestens eine Erfassungseinrichtung erfassten mindestens einen Zustandsparameter auf. Die mindestens eine Verstelleinrichtung ist insbesondere dazu eingerichtet, die mindestens eine Lichtquelle in Abhängigkeit von dem mindestens einen erfassten Zustandsparameter automatisch relativ zu der mindestens einen aufzuziehenden Pflanze zu verlagern. Durch die Verlagerung der mindestens einen Lichtquelle kann deren Relativposition, insbesondere deren Abstand, zu der mindestens einen aufzuziehenden Pflanze, in Abhängigkeit von dem mindestens einen Zustandsparameter eingestellt, insbesondere optimiert werden. Die Pflanzenleuchte, insbesondere deren Geometrie, ist an die Bedürfnisse der mindestens einen aufzuziehenden Pflanze anpassbar. Dies begünstigt ein gesundes und effizientes Pflanzenwachstum.

Der mindestens eine schwenkbar gelagerter Ausleger ermöglicht eine Verlagerung der mindestens einen Lichtquelle relativ zu dem Leuchtengrundkörper. Eine Verlagerung des Leuchtengrundkörpers ist nicht erforderlich. Der mindestens eine Leuchtengrundkörper kann insbesondere ortsfest sein. Hierdurch ist die Stabilität der Lampe erhöht. Der Leuchtengrundkörper kann beispielsweise ein Standfuß der Leuchte sein.

Der schwenkbar gelagerte Ausleger ermöglicht eine einfache und zielgerichtete Verlagerung der mindestens einen Leuchte. Insbesondere ist der mindestens eine Ausleger um eine horizontale Achse verschwenkbar.

Bevorzugt weist die Leuchte eine Mehrzahl von schwenkbar an den Leuchtengrundkörper gelagerten Auslegern auf. Beispielsweise können die Ausleger sternförmig von einem als Standfuß ausgebildeten Leuchtengrundkörper ausgehen. Die Ausleger können insbesondere bezogen auf den Leuchtengrundkörper symmetrisch angeordnet sein. Beispielsweise weist die Leuchte vier, jeweils um 90° zueinander versetzte Ausleger auf.

Mehrere Ausleger können insbesondere schirmartig an dem Leuchtengrundkörper angeordnet sein. Das Verschwenken der Ausleger bewirkt damit ein Öffnen bzw. Schließen des durch die Ausleger gebildeten Schirms. Hierdurch ist auf einfache Weise eine Anpassung der Lampengeometrie in Höhe und Breite möglich.

Die Verlagerbarkeit der mindestens einen Lichtquelle entlang mindestens eines Auslegers der Verstelleinrichtung ermöglicht die Verlagerung um einen weiteren Freiheitsgrad. Insbesondere kann die Verlagerung um einen weiteren Freiheitsgrad zusätzlich zu der Höhenverstellung des Grundkörpers und einer Schwenkbarkeit des mindestens einen Auslegers erfolgen.

Dies erhöht die Flexibilität bei der Verlagerung der mindestens einen Lichtquelle. Die Position der mindestens einen Lichtquelle ist besonders genau an den mindestens einen Zustandsparameter, insbesondere die Größe, der mindestens einen aufzuziehenden Pflanze anpassbar. Bevorzugt erfolgt die Verlagerung der mindestens einen Lichtquelle entlang des mindestens einen Auslegers abhängig von der Schwenkstellung des Auslegers.

Bevorzugt ist die mindestens eine Lichtquelle an mindestens einem Substrat, insbesondere an mindestens einem flexiblen Substrat, angeordnet. Das mindestens eine Substrat ist besonders bevorzugt entlang des mindestens einen Auslegers verlagerbar, insbesondere geführt verlagerbar. Das mindestens eine Substrat mit der mindestens einen Lichtquelle kann beispielsweise mindestens ein Lichtband ausbilden.

Die mindestens eine Lichtquelle ist insbesondere entlang des Auslegers geführt verlagerbar, insbesondere geführt verschiebbar. Beispielsweise kann der mindestens eine Ausleger eine Führungsschiene für das mindestens eine Substrat, an welchem die mindestens eine Lichtquelle angeordnet ist, insbesondere für ein Lichtband, aufweisen.

Durch die Verlagerung der mindestens einen Lichtquelle relativ zu der mindestens einen aufzuziehenden Pflanze ist zudem unnötiges, nicht auf die Pflanze fallendes Streulicht vermindert, insbesondere vermieden. Hierdurch ist die Energieeffizienz der Leuchte verbessert. Die Leuchte ermöglicht eine effiziente und wirtschaftliche Pflanzenaufzucht.

Die Verlagerung der mindestens einen Lichtquelle relativ zu der mindestens einen aufzuziehenden Pflanze kann insbesondere kontinuierlich oder schrittweise in Abhängigkeit einer Änderung des mindestens einen Zustandsparameters, bevorzugt in Abhängigkeit eines Wachstums der mindestens einen aufzuziehenden Pflanze, erfolgen. Bevorzugt kann die Relativposition der mindestens einen Lichtquelle kontinuierlich oder schrittweise an ein Wachstum der mindestens einen aufzuziehenden Pflanze anpassbar sein. Beispielweise kann die Verlagerung der mindestens einen Lichtquelle derart erfolgen, dass eine möglichst gute Abdeckung der mindestens einen aufzuziehenden Pflanze durch den Lichtkegel der mindestens einen Lichtquelle gewährleistet ist. Die mindestens eine aufzuziehende Pflanze kann jederzeit optimal mit Licht versorgt werden.

Die Leuchte dient der Aufzucht mindestens einer aufzuziehenden Pflanze. Die Pflanzenaufzucht kann sich über eine oder mehrere Vegetationsphasen der mindestens einen aufzuziehenden Pflanze erstrecken, insbesondere über die Keimlingsphase, die Wachstumsphase, die Blütephase, die Fortpflanzungsphase und/oder die Erntephase. Die mindestens eine aufzuziehende Pflanze kann zumindest zu Beginn der Pflanzenaufzucht insbesondere als Pflanzensamen, gekeimter Pflanzensamen, Keimling und/oder ausgereifte Pflanze vorliegen. Die Relativposition der mindesten einen Lichtquelle ist über die mindestens eine Verstelleinrichtung insbesondere an unterschiedliche Vegetationsphasen der mindestens einen aufzuziehenden Pflanze anpassbar.

Der mindestens eine Zustandsparameter kann insbesondere eine Größe, ein Blattflächenindex (englisch: leaf area index, LAI), ein Wassergehalt, ein Nährstoffgehalt, insbesondere ein Zuckergehalt, eine Vegetationsphase, insbesondere eine Wachstumsphase und/oder eine Temperatur der mindestens einen aufzuziehenden Pflanze sein. Als Zustandsparameter kommen zusätzlich oder alternativ auch ein Feuchtigkeitsgehalt eines Pflanzensubstrats und/oder der Umgebungsluft und/oder eine Temperatur der Umgebungsluft und/oder eines Pflanzensubstrats in Betracht. Der mindestens eine Zustandsparameter ist bevorzugt ein Wachstumsparameter der mindestens einen aufzuziehenden Pflanze. Unter einem Wachstumsparameter sei hier und im Folgenden ein Zustandsparameter verstanden, der Rückschlüsse auf ein Pflanzenwachstum der mindestens einen aufzuziehenden Pflanze erlaubt. Beispielhafte Wachstumsparameter sind insbesondere die Größe, die Vegetationsphase, insbesondere die Wachstumsphase, und/oder der Blattflächenindex der mindestens einen aufzuziehenden Pflanze. Die Verlagerung der mindestens einen Lichtquelle kann bevorzugt abhängig von der Größe der Pflanze und/oder deren Vegetationsphase, insbesondere Wachstumsphase, erfolgen. Die Verlagerung der mindestens einen Lichtquelle kann insbesondere kontinuierlich oder schrittweise in Abhängigkeit der Größe und/oder der Vegetationsphase der mindestens einen aufzuziehenden der Pflanze erfolgen.

Die mindestens eine Verstelleinrichtung ist insbesondere dazu eingerichtet, die mindestens eine Lichtquelle in Abhängigkeit von dem mindestens einen erfassten Zustandsparameter automatisch, insbesondere vollautomatisch, relativ zu der mindestens einen aufzuziehenden Pflanze zu verlagern. Beispielsweise weist die mindestens eine Verstelleinrichtung eine Auswerteeinheit zur Auswertung des mindestens einen Zustandsparameters und/oder zur Steuerung der Verlagerung der mindestens einen Lichtquelle in Abhängigkeit von dem mindestens einen Zustandsparameter auf.

Die Verlagerung der mindestens einen Lichtquelle kann insbesondere motorisch, hydraulisch und/oder pneumatisch erfolgen. Bevorzugt erfolgt die Verlagerung der mindestens einen Lichtquelle durch einen Antrieb der mindestens Verstelleinrichtung. Bevorzugt weist die mindestens eine Verstelleinrichtung einen motorischen, insbesondere elektromotorischen, hydraulischen und/oder pneumatischen Antrieb auf. Der Antrieb kann beispielsweise durch eine Auswerteeinheit der mindestens einen Verstelleinrichtung in Abhängigkeit von dem mindestens einen Zustandsparameter angesteuert werden.

Die Leuchte weist mindestens eine Lichtquelle zur Erzeugung von Licht für die Aufzucht der mindestens einen aufzuziehenden Pflanze auf. Das mit Hilfe der mindestens einen Lichtquelle erzeugte Licht wird auf die mindestens eine aufzuziehende Pflanze eingestrahlt. Bevorzugt weist die Leuchte eine Mehrzahl von Lichtquellen auf. Eine Mehrzahl von Lichtquellen ermöglicht eine bessere Abdeckung der mindestens einen aufzuziehenden Pflanze mit einzustrahlendem Licht.

Bevorzugt weist die mindestens eine Lichtquelle mindestens eine LED auf. LEDs sind robust und energieeffizient. Insbesondere weist die mindestens eine Lichtquelle mindestens eine mehrfarbige LED auf.

Besonders bevorzugt ist eine Abstrahlcharakteristik der mindestens einen Lichtquelle variierbar. Beispielsweise können Lichtspektrum und/oder Intensität des durch die mindestens eine Lichtquelle erzeugbaren Lichts variierbar sein. Insbesondere kann die Abstrahlcharakteristik der mindestens einen Lichtquelle abhängig von dem mindestens einen Zustandsparameter der mindestens einen aufzuziehenden Pflanze anpassbar sein. Beispielsweise kann ein Lichtspektrum der mindestens einen Lichtquelle an eine jeweilige Vegetationsphase, insbesondere Wachstumsphase, der mindestens einen aufzuziehenden Pflanze anpassbar sein. Als besonders geeignet haben sich LEDs mit anpassbarer Abstrahlcharakteristik, insbesondere anpassbarem Lichtspektrum, erwiesen.

Die mindestens eine Verstellvorrichtung weist bevorzugt einen Linearantrieb, insbesondere einen Spindelantrieb auf. Eine derartige Leuchte ist robust und ermöglicht eine präzise Verlagerung der mindestens einen Lichtquelle. Insbesondere ein Spindelantrieb ermöglicht eine stufenlose Verlagerung der mindestens einen Lichtquelle. Die Leuchte, insbesondere deren Geometrie, ist stufenlos an den mindestens einen Zustandsparameter der Pflanze anpassbar. Der Linearantrieb, insbesondere der Spindelantrieb, ermöglicht eine lineare Verlagerung von zumindest Teilen der Leuchte. Insbesondere kann hierdurch eine Höhenanpassung der Leuchte, insbesondere der mindestens einen Lichtquelle, erfolgen. Die Leuchte ist besonders gut an eine sich ändernde Größe der mindestens einen aufzuziehenden Pflanze anpassbar.

Der Linearantrieb, insbesondere der Spindelantrieb, kann beispielsweise einen Motor, insbesondere Elektromotor, aufweisen. Als besonders geeignet hat sich ein Torquemotor erwiesen. Insbesondere durch einen Spindelantrieb kann die Drehbewegung eines Motors in eine Linearbewegung umgewandelt werden.

Eine Leuchte nach Anspruch 2 ist stabil und präzise verstellbar. Durch das Kopplungselement ist der mindestens eine Ausleger auf einfache und präzise Weise verschwenkbar. Die Verschwenkung erfolgt insbesondere geführt. Eine mit Hilfe des Lineartriebs, insbesondere des Spindelantriebs, erzeugte lineare Bewegung ist durch das Kopplungselement in eine Schwenkbewegung des mindestens einen Auslegers überführbar. Bevorzugt ist je Ausleger ein Kopplungselement vorhanden.

Das Kopplungselement ist insbesondere in Form einer Kopplungsstange ausgeführt. Die Kopplungsstange ist insbesondere mit jeweiligen Ausleger und dem Linearantrieb, insbesondere dem Spindelmutter in Wirkverbindung. Die Kopplungsstange kann insbesondere an dem jeweiligen Ausleger und/oder dem Linearantrieb, insbesondere der Spindelmutter, befestigt, beispielsweise schwenkbar befestigt sein.

Die Kopplungsstange bildet bevorzugt ein Führungsgetriebe für den mindestens einen Ausleger. Die Kopplungsstange kann beispielsweise starr mit dem Linearantrieb, insbesondere mit der Spindelmutter des Spindelantriebs, verbunden sein. Die Kopplungsstange kann beispielsweise verschiebbar, insbesondere entlang einer Führung versschiebbar, und/oder verschwenkbar an dem jeweiligen Ausleger angeordnet sein. Beispielsweise ist die Kopplungsstange über ein Torsions-Ausgleichselement an dem jeweiligen Ausleger angeordnet, insbesondere befestigt. Das Führungsgetriebe ist konstruktiv einfach, stabil und zuverlässig.

Eine Leuchte nach Anspruch 4 ist konstruktiv einfach und zuverlässig. Aufgrund der Kopplung der mindestens einen Lichtquelle mit dem Linearantrieb, insbesondere mit der Spindelmutter des Spindelantriebs, ist eine Verlagerung der mindestens einen Lichtquelle durch den Linearantrieb gewährleistet. Ein separater Antrieb für die Verlagerung der mindestens einen Lichtquelle entlang des mindestens einen Auslegers ist nicht erforderlich. Insbesondere ist mindestens ein Substrat, insbesondere mindestens ein flexibles Substrat, an welchem die mindestens eine Lichtquelle bevorzugt angeordnet sein kann, an den Linearantrieb, insbesondere die Spindelmutter des Spindeltriebs, gekoppelt. Das mindestens eine Substrat kann beispielsweise endseitig, insbesondere mit einer Stirnseite, an dem Linearantrieb, insbesondere an der Spindelmutter, befestigt sein.

Bevorzugt sind der mindestens eine Ausleger und die mindestens einen Lichtquelle, insbesondere deren mindestens eines Substrat, an den Linearantrieb, insbesondere an die Spindelmutter, gekoppelt. Dies gewährleistet eine gleichzeitige und aufeinander abgestimmte Verlagerung des mindestens einen Auslegers und der mindestens einen Lichtquelle. Insbesondere ist eine Verlagerung der mindestens einen Lichtquelle entlang des mindestens einen Auslegers abhängig von dessen Schwenkstellung gewährleistet.

Eine Leuchte nach Anspruch 5 ist flexibel und langlebig. Das flexible Substrat ist einfach und zuverlässig an eine durch die Verstelleinrichtung bewirkte Verlagerung anpassbar. Hierdurch ist eine zuverlässige Befestigung der mindestens einen Lichtquelle bei deren Verlagerung gewährleistet. Ein unnötiger Verschleiß ist vermieden.

Das mindestens eine flexible Substrat ist insbesondere eine flexible Leiterplatte aufweisen. Eine flexible Leiterplatte ermöglicht eine zuverlässige Stromversorgung und Ansteuerung der mindestens einen Lichtquelle. Bevorzugt ist eine Mehrzahl von Lichtquellen, insbesondere eine Mehrzahl von LEDs, auf dem mindestens einen flexiblen Substrat angeordnet. Das flexible Substrat kann ein Lichtband, insbesondere ein LED-Band, sein. Bevorzugt weist die Leuchte ein flexibles Substrat, insbesondere ein Lichtband, je Ausleger auf.

Eine Leuchte nach Anspruch 6 ist besonders flexibel. Die Verlagerbarkeit des mindestens einen flexiblen Substrats entlang mindestens eines Auslegers der Verstelleinrichtung erhöht die Flexibilität bei der Verlagerung der mindestens einen Lichtquelle. Die Position der mindestens einen Lichtquelle ist besonders genau an den mindestens einen Zustandsparameter, insbesondere die Größe, der mindestens einen aufzuziehenden Pflanze anpassbar. Bevorzugt erfolgt die Verlagerung des mindestens einen flexiblen Substrats entlang des mindestens einen Auslegers abhängig von der Schwenkstellung des Auslegers.

Das mindestens eine flexible Substrat ist insbesondere entlang des Auslegers geführt verlagerbar, insbesondere geführt verschiebbar. Beispielsweise kann der mindestens eine Ausleger eine Führungsschiene für das mindestens eine flexible Substrat, insbesondere das Lichtband, aufweisen. Bevorzugt ist je ein flexibles Substrat, insbesondere ein Lichtband, je Ausleger in einer jeweiligen Führungsschiene geführt verschiebbar.

Eine Leuchte nach Anspruch 7 ist konstruktiv einfach und zuverlässig. Aufgrund der Kopplung des mindestens einen flexiblen Substrats mit dem Linearantrieb, insbesondere mit der Spindelmutter des Spindelantriebs, ist eine Verlagerung des mindestens einen flexiblen Substrats durch den Linearantrieb gewährleistet. Einen separaten Antrieb für die Verlagerung des mindestens einen flexiblen Substrats ist nicht erforderlich. Das mindestens eine flexible Substrat kann beispielsweise endseitig, insbesondere mit einer Stirnseite, an dem Linearantrieb, insbesondere an der Spindelmutter, befestigt sein.

Bevorzugt sind der mindestens eine Ausleger und das mindestens eine flexible Substrat an den Linearantrieb, insbesondere an die Spindelmutter, gekoppelt. Dies gewährleistet eine gleichzeitige und aufeinander abgestimmte Verlagerung des mindestens einen Auslegers und des mindestens einen flexiblen Substrats. Insbesondere ist eine Verlagerung des mindestens einen flexiblen Substrats entlang des mindestens einen Auslegers abhängig von dessen Schwenkstellung gewährleistet.

Die Leuchte weist bevorzugt mindestens zwei Lichtquellen auf, wobei die mindestens zwei Lichtquellen derart angeordnet sind, dass mittels der mindestens zwei Lichtquellen Licht von mindestens zwei Seiten auf die mindestens eine aufzuziehende Pflanze einstrahlbar ist. Eine derartige Leuchte gewährleistet eine besonders effiziente Lichteinstrahlung auf die mindestens eine aufzuziehende Pflanze. Das Einstrahlen von Licht von mindestens zwei Seiten auf die mindestens eine aufzuziehende Pflanze verbessert die Lichtausbeute der Pflanze. Insbesondere werden nicht nur randseitige, beispielswiese obere Blätter, der Pflanze mit Licht bestrahlt. Die Anordnung der mindestens zwei Lichtquellen ist insbesondere derart, dass mindestens eine der Lichtquellen von oben Licht auf die Pflanze einstrahlt und mindestens eine weitere Lichtquelle seitlich Licht auf die mindestens eine Pflanze einstrahlt. Bevorzugt kann das Einstrahlen von Licht mit Hilfe mehrerer Lichtquellen von oben und mindestens zwei Seiten erfolgen.

Besonders bevorzug weist die Leuchte mindestens zwei Lichtquellen je flexiblen Substrat, insbesondere je Lichtband, auf. Das mindestens eine flexible Substrat kann insbesondere derart angeordnet sein, dass mittels der mindestens zwei Lichtquellen des flexiblen Substrats Licht von mindestens zwei Seiten auf die mindestens eine aufzuziehende Pflanze einstrahlbar ist.

Beispielsweise kann das Lichtband entlang einer Außenkontur der Pflanze gekrümmt sein. Durch die Anordnung des flexiblen Substrats ist insbesondere gewährleistet, dass mindestens eine der Lichtquellen von oben Licht auf die Pflanze einstrahlt und mindestens eine weitere Lichtquelle seitlich Licht auf die mindestens eine Pflanze einstrahlt.

Eine Leuchte nach Anspruch 8 ist besonders gut an die mindestens eine aufzuziehende Pflanze anpassbar. Abstandssensoren erlauben auf einfache und effiziente Weise, die Positionierung der mindestens einen Lichtquelle relativ zu der mindestens einen aufzuziehenden Pflanze. 3D-Scanner, insbesondere Laser-Scanner, erlauben es, die Größe der Pflanze zu vermessen. Geeignete 3D-Scanner sind beispielsweise Lidar-Systeme, Ladar-Systeme und/oder ToF-Kameras. Lidar ist die Abkürzung für den englischen Begriff "Light detection and ranging" bzw. "Light imaging, detection and ranging". Ladar ist die Abkürzung für den englischen Begriff "Light amplification by stimulated emission of radiation detection and ranging". ToF ist die Abkürzung für den englischen Begriff "Time of Flight". Insbesondere kann mit 3D-Scannern ein Wachstumsfortschritt der Pflanze besonders genau nachvollzogen werden. Die Leuchte ist an die Pflanzengröße besonders genau anpassbar.

Ein Spektrometer, insbesondere ein Spektrometer für den Nahinfrarotbereich (NIR), auch NIR-Spektrometer genannt, ermöglicht eine Spektralanalyse von der mindestens einen aufzuziehenden Pflanze ausgehender Strahlung. Die Spektralanalyse erlaubt Rückschlüsse auf verschiedene Zustandsparameter der mindestens einen aufzuziehenden Pflanze, beispielsweise Nährstoffgehalt, Wassergehalt, Größe und/oder Blattflächenindex. Insbesondere kann die jeweilige Vegetationsphase, insbesondere eine jeweilige Wachstumsphase, der Pflanze bestimmt werden.

Bevorzugt weist die mindestens eine Erfassungseinrichtung mindestens ein Spektrometer, insbesondere ein Infrarotspektrometer, insbesondere ein NIR-Spektrometer, auf. Im Infrarotbereich ist der Reflexionsgrad von Pflanzenteilen, insbesondere von Blättern, besonders hoch. Es kann daher besonders genau die Größe der Pflanze, insbesondere die Bedeckung mit Blattwerk, insbesondere der Blattflächenindex, bestimmt werden. Hierdurch sind einfache und zuverlässige Rückschlüsse auf die Pflanzengröße und/oder die Vegetationsphase, insbesondere die Wachstumsphase, möglich. Die Position und/oder die Abstrahlcharakteristik der mindestens einen Lichtquelle sind besonders genau an den jeweiligen Zustand der mindestens einen aufzuziehenden Pflanze anpassbar. Die NIR-Spektroskopie hat sich als besonders geeignet erwiesen, den Wasser- und/oder Nährstoffgehalt der mindestens einen aufzuziehenden Pflanze zu vermessen. Durch den Wasser- und/oder Nährstoffgehalt können Rückschlüsse auf die jeweilige Vegetationsphase, insbesondere Wachstumsphase, der Pflanze gezogen werden. Zudem können diese Informationen dazu benutzt werden, eine automatische Bewässerung und/oder Düngung der mindestens einen aufzuziehenden Pflanze zu steuern, insbesondere zu regeln. Beispielsweise können, insbesondere auf Basis des NIR-Absorptionsspektrums der mindestens einen aufzuziehenden Pflanze, die Quantität und/oder Qualität der Nährstoffe in der Pflanze bestimmbar sein. Die Beleuchtungsparameter, insbesondere die Abstrahlcharakteristik der mindestens einen Lichtquelle, bevorzugt das Lichtspektrum der mindestens einen Lichtquelle, können derart an die Quantität und/oder Qualität der Nährstoffe in der Pflanze anpassbar sein, dass die Pflanze zur Produktion benötigter Nährstoffe angeregt wird.

Für die NIR-Spektroskopie geeignet sind insbesondere Wellenlängen von 700 nm bis 10000 nm, insbesondere 760 nm bis 2500 nm, insbesondere von 850 bis 2500 nm. Besonders bevorzugt ermöglicht das Infrarotspektrometer, insbesondere NIR-Spektrometer eine breitbandige Spektralanalyse von Wellenlängen zwischen 700 nm und 10000 nm, insbesondere zwischen 850 und 2500 nm.

Für die Nahinfrarot-Spektroskopie zeichnet der NIR-Spektrometer die von der mindestens einen aufzuziehenden Pflanze reflektierte Nahinfrarot-Strahlung auf. Das NIR-Spektrometer kann beispielsweise ein NIR-Sensor sein. Ein beispielhafter geeigneter NIR-Sensor ist beispielsweise in DE 10 2019 102 176 A1 beschrieben.

Die von der mindestens einen aufzuziehenden Pflanze, insbesondere deren Blättern, ausgehende Infrarotstrahlung ist insbesondere reflektierte Infrarotstrahlung. Hierzu kann Infrarotstrahlung, insbesondere NIR-Strahlung auf die mindestens eine aufzuziehende Pflanze eingestrahlt werden. Beispielsweise das mittels der mindestens einen Lichtquelle erzeugte und auf die Pflanze eingestrahlte Licht Infrarotstrahlung umfassen. Beispielsweise weist das Lichtspektrum der mindestens einen Lichtquelle NIR-Strahlung enthält. Alternativ oder zusätzlich hierzu kann die Erfassungseinrichtung mindestens eine NIR-Strahlungsquelle, beispielsweise NIR-LEDs und/oder NIR-Laser, aufweisen. Bevorzugt weist die NIR-Strahlungsquelle einen NIR-Breitbandemitter auf. Eine beispielhafte geeignete Infrarotstrahlungsquelle ist in DE 10 2018 101 974 A1 beschrieben. Mittels der NIR-Strahlungsquelle ist bevorzugt NIR-Strahlung mit Wellenlängen von 700 nm bis 10000 nm, insbesondere 760 nm bis 2500 nm, insbesondere von 850 bis 2500 nm, erzeugbar. Mit Hilfe einer NIR-Strahlungsquelle kann die für die NIR-Spektroskopie benötigte NIR-Strahlung besonders zielgerichtet eingestrahlt werden. Dies erhöht die Effizienz und Messgenauigkeit des Spektrometers.

Die mindestens eine Erfassungseinrichtung wird bevorzugt bei Verlagerung der mindestens einen Lichtquelle durch die mindestens eine Verstelleinrichtung verlagert. Die Erfassung berücksichtigt eine Verlagerung der mindestens einen Lichtquelle. Die mindestsens eine Erfassungseinrichtung, insbesondere das mindestens eine Spektrometer, der mindestens eine Abstandssensor und/oder der mindestens eine 3D-Scanner, kann beispielsweise an einem oder mehreren der Ausleger der Verstelleinrichtung angeordnet sein. Beispielsweise kann die mindestsens eine Erfassungseinrichtung direkt an dem mindestens einen Ausleger angeordnet sein. Zusätzlich oder alternativ kann die mindestsens eine Erfassungseinrichtung an einem flexiblen Substrat der mindestens einen Lichtquelle angeordnet sein.

Eine Verlagerbarkeit der mindestens einen Erfassungseinrichtung, insbesondere des mindestens eines NIR-Spektrometers, hat zudem den Vorteil, dass die Lage des mindestens einen Sensors relativ zu der mindestens einen aufzuziehenden Pflanze variiert werden kann. Beispielsweise können Messungen in verschiedenen Relativpositionen durchgeführt werden. Dies ermöglicht besonders genaue Messungen. Eine mehrmalige Vermessung ist beispielsweise zu Beginn der jeweiligen Pflanzenaufzucht möglich. Hierdurch kann der genaue Anfangszustand der Pflanze bestimmt werden. Ausgehend von dieser Bestimmung können die weiteren Parameter für die Pflanzenaufzucht festgelegt werden. Beispielsweise kann festgelegt werden, ab welcher Pflanzengröße eine Abstrahlcharakteristik der mindestens einen Lichtquelle variiert wird.

Die Leuchte kann eine Datenschnittstelle zum Empfang und/oder Senden von Daten enthalten. Die Datenschnittstelle kann kabelgebunden und/oder drahtlos sein. Insbesondere kann die Datenschnittstelle für den Datenaustausch über Bluetooth, WLAN und/oder Mobilfunk, insbesondere 3G, 4G und/oder 5G, ausgelegt sein. Über die Datenschnittstelle kann insbesondere eine Anbindung an eine App auf einem Gerät, insbesondere einem Smartphone, eines Nutzers der Pflanzenleuchte erfolgen. Mit Hilfe der Datenschnittstelle können beispielsweise Betriebsparameter und/oder Aufzuchtsdaten an die Leuchte übergeben werden. Beispielsweise können Informationen über die aufzuziehende Pflanze, insbesondere über deren Pflanzengattung und/oder -art, an die Leuchte übermittelt werden. Anhand der Aufzuchtsdaten kann die Leuchte optimal an die Aufzucht der betreffenden Pflanze angepasst werden. Beispielsweise können spezielle Betriebsparameter, die insbesondere die Verstellung der Leuchte und/oder eine Variation der Abstrahlcharakteristik betreffen, übergeben werden. Alternativ können für verschiedene Pflanzengattung und/oder Arten derartige Betriebsparameter schon in einem Speicher der Leuchte gespeichert sein. Über die Datenschnittstelle können auch Daten ausgegeben werden. Beispielsweise können Daten über den mindestens einen erfassten Zustandsparameter ausgegeben werden. Beispielsweise kann bei Einreichen einer neuen Vegetationsphase eine Mitteilung an einen Nutzer ausgegeben werden.

Eine Leuchte nach Anspruch 9 ist besonders flexibel einsetzbar und benutzerfreundlich. Insbesondere kann die Pflanzenaufzucht vollautomatisch erfolgen. Beispielsweise weist die mindestens eine Sekundär-Erfassungseinrichtung einen Feuchtigkeitssensor und/oder Temperatursensor auf. Mit Hilfe eines Feuchtigkeitssensors kann beispielsweise der Feuchtigkeitsgehalt eines Pflanzensubstrats, der Luft und/oder der mindestens einen aufzuziehenden Pflanze bestimmt werden. Abhängig von dem bestimmten Feuchtigkeitsgehalt kann eine Bewässerung, insbesondere vollautomatisch, gesteuert werden. Mit Hilfe eines Temperatursensors kann eine für das Pflanzenwachstum erforderliche Temperatur überwacht, insbesondere gesteuert werden.

Es ist eine weitere Aufgabe der Erfindung, eine Vorrichtung zur Pflanzenaufzucht zu verbessern.

Diese Aufgabe ist gelöst durch eine Vorrichtung mit den in Anspruch 10 angegebenen Merkmalen. Die Vorrichtung weist mindestens eine Leuchte zur Pflanzenaufzucht, wie sie oben beschrieben ist, und mindestens ein Gefäß zur Aufnahme mindestens eines Pflanzensubstrats auf. Die Vorrichtung weist die Vorteile der oben beschriebenen Leuchte auf. Das Gefäß kann insbesondere zur Aufnahme eines Pflanzensubstrats für eine Hydrokultur ausgebildet sein. Die Vorrichtung eignet sich insbesondere zur hydroponischen Pflanzenaufzucht.

Die Vorrichtung kann insbesondere modular ausgebildet sein. Beispielsweise können verschiedene Leuchten und verschiedene Gefäße kombiniert werden, um an unterschiedliche Arten der Pflanzenaufzucht, insbesondere unterschiedliche Pflanzengrößen und/oder unterschiedliche Anzahlen von aufzuziehenden Pflanzen, anpassbar zu sein. Unterschiedliche Gefäße können sich beispielsweise für Hydrokulturen und/oder die Verwendung von Blumenerde als Pflanzensubstrat eignen. Über verschiedene Gefäße und/oder Pflanzenleuchten können zudem unterschiedliche Pflanzengrößen berücksichtigt werden.

Die Vorrichtung weist bevorzugt mindestens ein Flüssigkeitsreservoir und/oder ein Düngemittelreservoir zur Versorgung der mindestens einen aufzuziehenden Pflanze mit Flüssigkeit und/oder Düngemittel auf, insbesondere in Abhängigkeit mindestens eines erfassten Zustandsparameters der mindestens einen aufzuziehenden Pflanze. Eine derartige Vorrichtung ist besonders vielseitig. Insbesondere kann mit Hilfe der Vorrichtung eine vollautomatisierte Pflanzenaufzucht erfolgen. Mit Hilfe eines Flüssigkeitsreservoirs und/oder Düngemittelreservoirs kann eine an den jeweiligen Zustandsparameter angepasste Bewässerung und/oder Düngung der Pflanze erfolgen. Beispielsweise kann mit Hilfe eines Feuchtigkeitssensors gemessen werden, ob eine Bewässerung der Pflanze erforderlich ist. Wassergehalt und/oder Nährstoffgehalt können auf einfache und genaue Weise auch mit Hilfe eines NIR-Spektrometers bestimmt werden. Bewässerung und/oder Düngung kann optimal an den jeweiligen Zustand der mindestens einen aufzuziehenden Pflanze angepasst werden. Dies verbessert das Pflanzenwachstum und die Effizienz des Aufzuchtsverfahrens.

Das Wasserreservoir und/oder das Düngemittelreservoir können insbesondere Teil der Leuchte sein. Beispielsweise kann die Leuchte in dem Leuchtengrundkörper eine Einfüllöffnung zum Befüllen des Wasserreservoirs und/oder Düngemittelreservoirs aufweisen.

Die Vorrichtung, insbesondere das Gefäß, kann auch eine Bewässerungsvorrichtung zur automatischen Bewässerung aufweisen. Insbesondere kann die Bewässerungsvorrichtung zur Tröpfchenbewässerung ausgebildet sein.

Die Vorrichtung, insbesondere das Gefäß, kann eine Temperaturregeleinrichtung, insbesondere eine Heizung, aufweisen. Mit der Temperaturregeleinrichtung kann die optimale Temperatur für die Pflanzenaufzucht gewährleistet werden.

Es ist eine weitere Aufgabe der Erfindung, ein Verfahren zur Pflanzenaufzucht zu verbessern.

Diese Aufgabe ist gelöst durch ein Verfahren mit den in Anspruch 11 angegebenen Schritten. Zunächst wird mindestens eine aufzuziehende Pflanze und eine Leuchte, wie sie oben beschrieben ist, bereitgestellt. Vorzugsweise wird die oben beschriebene Vorrichtung zur Pflanzenaufzucht bereitgestellt. Mit Hilfe der mindestens einen Lichtquelle der Leuchte wird Licht auf die mindestens eine aufzuziehende Pflanze eingestrahlt. Mit Hilfe der mindestens einen Erfassungseinrichtung der Leuchte wird mindestens ein Zustandsparameter der mindestens einen aufzuziehenden Pflanze erfasst. Mit Hilfe der mindestens einen Verstelleinrichtung wird die mindestens eine Lichtquelle relativ zu der mindestens einen aufzuziehenden Pflanze in Abhängigkeit von dem mindestens einen Zustandsparameter verlagert. Das Verfahren weist die in Bezug auf die Leuchte beschriebenen Vorteile auf. Das Pflanzenwachstum kann mit diesem Verfahren besonders vorteilhaft gefördert werden. Die Pflanzenaufzucht ist effizient und energiesparend.

Die mindestens eine aufzuziehende Pflanze kann insbesondere als Pflanzensamen, gekeimter Pflanzensamen, Keimling und/oder ausgereifte Pflanze bereitgestellt werden. Das Verfahren zur Pflanzenaufzucht kann sich über eine oder mehrere der Vegetationsphasen der mindestens einen aufzuziehenden Pflanze erstrecken, insbesondere über die Keimlingsphase, die Wachstumsphase, die Blütephase, die Fortpflanzungsphase und/oder die Erntephase.

Bevorzugt wird mittels der mindestens einen Erfassungseinrichtung ein Blattflächenindex und/oder eine Größe der mindestens einen Pflanze erfasst. Ein derartiges Verfahren ist besonders genau an die unterschiedlichen Wachstumsstadien der Pflanze anpassbar. Die Vermessung kann insbesondere mit mindestens einem Spektrometer, bevorzugt NIR-Spektrometer, mindestens einem Abstandssensor und/oder mindestens einem 3D-Scanner erfolgen.

Bevorzugt wird eine Abstrahlcharakteristik der mindestens einen Lichtquelle abhängig von dem erfassten mindestens einen Zustandsparameter variiert, insbesondere angepasst. Ein derartiges Verfahren ist besonders gut an die jeweiligen Bedürfnisse der Pflanze anpassbar. Insbesondere können verschiedene Wachstumsstadien der mindestens einen aufzuziehenden Pflanze berücksichtigt werden. Die Abstrahlcharakteristik, insbesondere das Spektrum und/oder die Intensität der mindestens einen Lichtquelle, können an den jeweiligen Zustand, insbesondere die Vegetationsphase, der mindestens einen aufzuziehenden Pflanze angepasst werden.

Ein Verfahren nach Anspruch 12 ist besonders flexibel und vielseitig einsetzbar. Die Bestimmung mindestens eines zusätzlichen Zustandsparameters erlaubt eine noch genauere Berücksichtigung des jeweiligen Pflanzenzustands. Insbesondere die Bestimmung eines Wassergehalts und/oder Nährstoffgehalts der mindestens einen aufzuziehenden Pflanze ermöglicht eine vollautomatisierte Bewässerung und/oder Düngung der Pflanze. Nicht nur die Beleuchtung, sondern auch die Versorgung der Pflanze mit Wasser und/oder Nährstoffen ist optimal an die Art der Pflanze und/oder deren jeweiligen Zustand anpassbar.

Ein Verfahren nach Anspruch 13 ist besonders vielseitig und präzise. Der Kalibrierschritt kann beispielsweise die Eingabe von Startparametern umfassen. Beispielsweise kann über eine Datenschnittstelle eine Art oder Gattung einer aufzuziehenden Pflanze und/oder bestimmte Erfordernisse an die Pflanzenaufzucht übergeben werden. Das weitere Aufzuchtsverfahren kann abhängig von diesen Startparametern durchgeführt werden.

Bevorzugt erfolgt in dem Kalibrierschritt eine automatische Erfassung der Anfangszustands, insbesondere der Art oder Gattung und/oder der anfänglichen Größe der aufzuziehenden Pflanze. Dadurch kann die optimale Startkonfiguration, insbesondere Position und/oder Abstandcharakteristik, der mindestens einen Lichtquelle automatisch gewählt werden. In dem Kalibrierschritt kann der mindestens eine Zustandsparameter mit Hilfe der mindestens einen Erfassungsvorrichtung bevorzugt mehrmals vermessen werden, besonders bevorzugt mit unterschiedlichen Positionen der mindestens einen Erfassungseinrichtung relativ zu der mindestens einen aufzuziehenden Pflanze.

Der Kalibrierschritt ist von besonderem Vorteil für modulare Vorrichtungen zur Pflanzenaufzucht. Unabhängig von der Kombination von Leuchte und Gefäß ist hierdurch eine optimale Anpassung der Leuchte an die aufzuziehende Pflanze gewährleistet.

Ein Verfahren nach Anspruch 14 ist besonders flexibel. Mehrere Freiheitsgrade erlauben eine besonders gute Anpassung der Position der mindestens einen Lichtquelle relativ zu der Pflanze. Mögliche Freiheitsgrade sind insbesondere eine Höhenverstellbarkeit der Leuchte, insbesondere eines Leuchtengrundkörpers, eine Verschwenkbarkeit mindestens eines Auslegers und/oder eine Verlagerbarkeit, insbesondere eine Verschiebbarkeit, der mindestens einen Lichtquelle entlang eines Auslegers, insbesondere eines verschwenkbaren Auslegers.

Ein Verfahren nach Anspruch 15 ist besonders präzise und ausfallsicher. Die Kopplung der Verlagerung in verschiedenen Freiheitsgraden, insbesondere in mindestens drei verschiedenen Freiheitsgraden, ermöglich eine präzise und abgestimmte Verlagerung der mindestens einen Lichtquelle. Die Verwendung eines einzigen Antriebs macht die Leuchte konstruktiv einfach und ausfallsicher.

Weitere Merkmale, Vorteile und Einzelheiten der Erfindung ergeben sich aus der nachfolgenden Beschreibung bevorzugter Ausführungsbeispiele anhand der Figuren. Es zeigen:
- Fig. 1: eine perspektivische Ansicht einer Vorrichtung zur Pflanzenaufzucht mit einer Leuchte, wobei eine Geometrie der Leuchte an eine geringe Größe einer aufzuziehenden Pflanze angepasst ist,
- Fig. 2: einen Ausleger und den Spindelantrieb der Leuchte gemäß Fig. 1,
- Fig. 3: eine perspektivische Ansicht der Vorrichtung gemäß Fig. 1, wobei eine Geometrie der Leuchte an eine größere Größe der aufzuziehenden Pflanze angepasst ist,
- Fig. 4: eine Seitenansicht der Vorrichtung gemäß Fig. 3,
- Fig. 5: eine perspektivische Ansicht von schräg unten der Vorrichtung gemäß Fig. 3 und
- Fig. 6: einen schematischen Verfahrensablauf eines Pflanzenaufzuchtverfahrens.

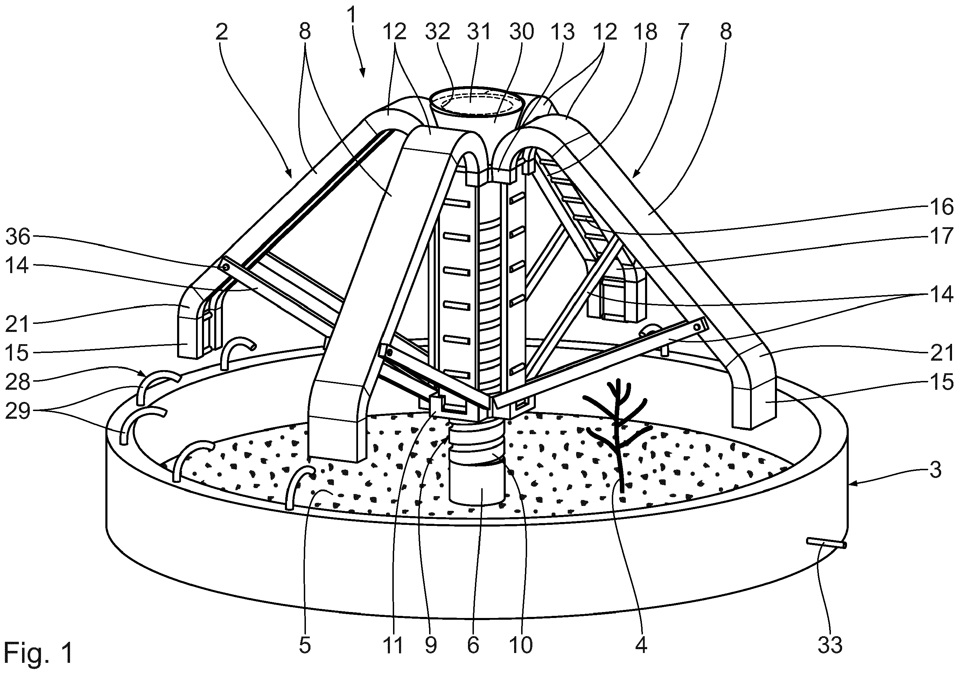

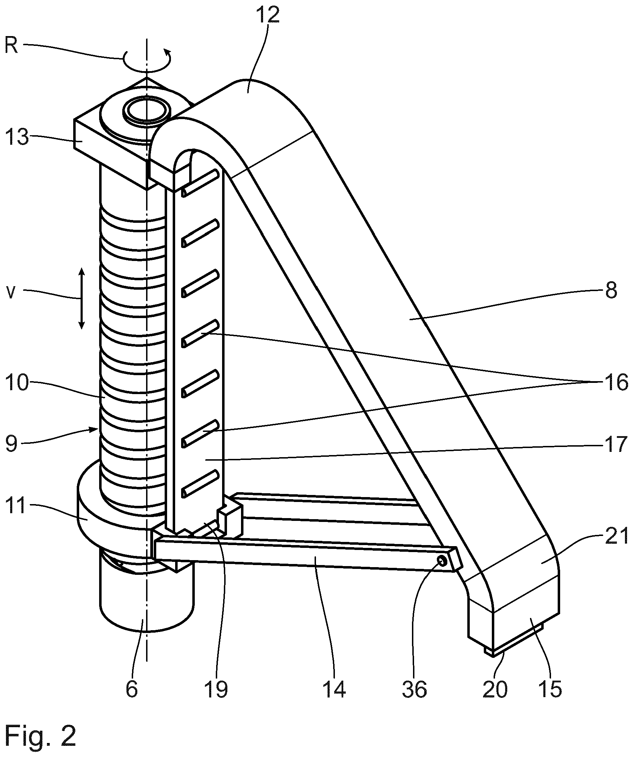

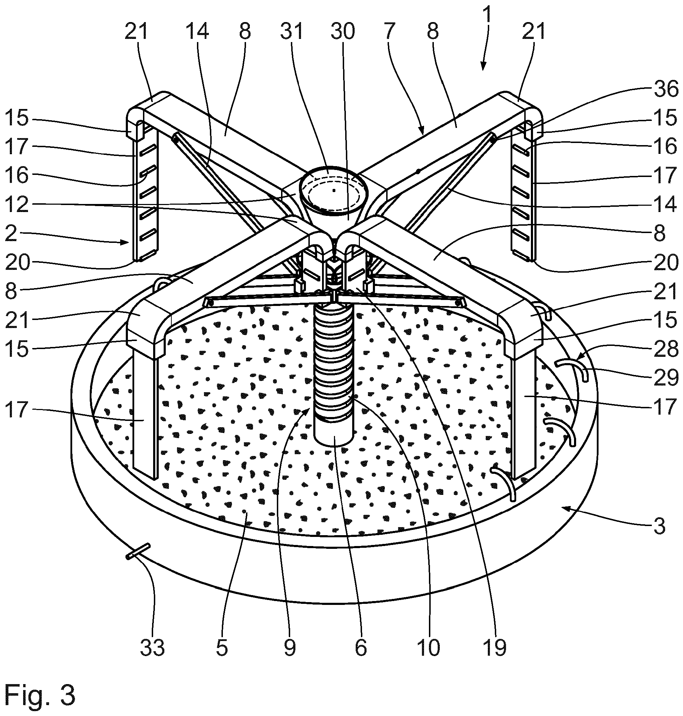

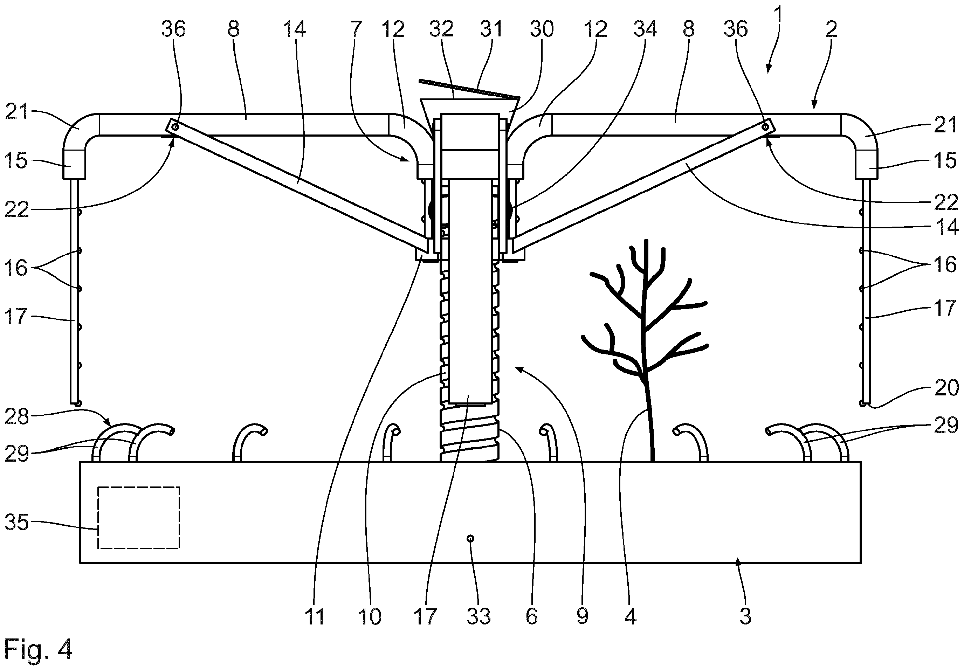

Anhand der Fig. 1 bis 5 wird ein Ausführungsbeispiel einer Vorrichtung 1 für die Pflanzenaufzucht beschrieben. Die Vorrichtung 1 weist eine Leuchte 2 zur Pflanzenaufzucht und ein Gefäß 3 auf. Die Leuchte 2 ist in ihrer Geometrie an das Wachstum einer aufzuziehenden, schematisch dargestellten Pflanze 4 anpassbar. In Fig. 1 ist die Pflanze 4 zu Beginn der Pflanzenaufzucht gezeigt. Die Geometrie der Leuchte 2 ist an die nur geringe Größe der Pflanze 4 angepasst. Fig. 2 zeigt einzelne Komponenten der Leuchte 2 zu Beginn der Pflanzenaufzucht. In den Fig. 3 bis 5 ist die Leuchte an ein inzwischen erfolgtes Pflanzenwachstum der Pflanze 4 und damit eine größere Größe der Pflanze 4 angepasst. Aus Gründen der Übersichtlichkeit ist die gewachsene Pflanze 4 nur in Fig. 4 schematisch gezeigt.

Der Behälter 3 bildet eine Aufnahme für ein in den Fig. 1 und 3 schematisch dargestelltes Pflanzensubstrat 5. Die Pflanze 4 ist in das Pflanzensubstrat 5 eingepflanzt. Bei dem Pflanzensubstrat 5 kann es sich beispielsweise um Pflanzenerde oder um ein Substrat für eine Hydrokultur handeln. In den Figuren ist schematisch nur eine aufzuziehende Pflanze 4 gezeigt. Aufgrund der Größe des Behälters 3 können jedoch auch mehrere Pflanzen in das darin enthaltene Pflanzensubstrat eingepflanzt sein. Beispielsweise können mehrere Pflanzen um die Leuchte 2 gruppiert werden.

Der Behälter 3 ist mit der Leuchte 2 einteilig ausgeführt. Die Leuchte 2 weist einen Leuchtengrundkörper 6 auf. Der Leuchtengrundkörper ist in Form eines mittig in dem Gefäß 3 angeordneten Standfußes ausgebildet.

Die Leuchte 2 weist eine Verstelleinrichtung 7 auf. Die Verstelleinrichtung 7 weist vier Ausleger 8 und einen Spindelantrieb 9 auf. Der Spindelantrieb 9 weist eine Gewindespindel 10 und eine Spindelmutter 11 auf. Die Gewindespindel 10 ist in den Pflanzengrundkörper 6 integriert. Beim Drehen der Spindelmutter 11 verfährt diese in Vertikalrichtung v entlang der Gewindespindel (vgl. Fig. 2).

Die Ausleger 8 sind sternförmig um den Leuchtengrundkörper 6 angeordnet. Die Ausleger 8 sind über ein flexibles Gelenk 12 schwenkbar an einer Manschette 13 gelagert (vgl. Fig. 2). Die Manschette 13 ist drehbar an dem Leuchtengrundkörper 6 angeordnet. Mit Hilfe des flexiblen Gelenks 12 können die Ausleger 8 gegenüber der Manschette 13 und damit gegenüber dem Leuchtengrundkörper 6 verschwenkt werden. Die Verschwenkung erfolgt bei dem dargestellten Ausführungsbeispiel um eine horizontale Schwenkachse. Die Verschwenkung erfolgt mit Hilfe des Spindelantriebs 9.

Die Ausleger 8 sind schirmartig an dem Leuchtengrundkörper 6 angeordnet. Bei der Anpassung der Leuchtengeometrie öffnet bzw. schließt sich der durch die Ausleger 8 gebildete Schirm.

Die Ausleger 8 sind jeweils über ein als Kopplungsstange 14 ausgebildetes Kopplungselement mit der Spindelmutter 11 gekoppelt. Die Kopplungsstangen 14 sind jeweils starr an der Spindelmutter 11 angeordnet. Die Kopplungsstangen 14 sind an den jeweiligen Ausleger 8 derart angeordnet, so dass die Kopplungsstangen 14 als Führungsgetriebe beim Verschwenken der Ausleger 8 dienen. Die Kopplungsstangen 14 sind an dem jeweiligen Ausleger 8 über ein Torsions-Ausgleichselement 36 angeordnet.

Die Verstelleinrichtung 13 weist einen Elektromotor in Form eines nicht gezeigten Torquemotors auf. Der Torquemotor ist im Bereich des Leuchtengrundkörpers 6 auf Höhe der Manschette 13 angeordnet. Durch Drehantrieb des Torquemotors kann die Manschette 13 relativ zu dem Grundkörper 6 in Rotation versetzt werden. Mit der Manschette 13 beginnen die Ausleger 8 zu rotieren. Über die Kopplungsstangen 14 wird die Rotation auf die Spindelmutter 11 übertragen. Die Rotation ist in Fig. 2 schematisch durch den Pfeil R gezeigt. Die Rotation wird auf die Gewindespindel 11 übertragen, woraufhin diese in Vertikalrichtung v verfährt. Abhängig von der Rotationsrichtung fährt die Spindelmutter an der Gewindespindel 10 nach oben bzw. nach unten. Durch die Vertikalverlagerung der Gewindespindel werden auch die Kopplungsstangen 14 nach oben verlagert. Die Kopplungsstangen 14 wirken hierbei als Führungsgetriebe, die ein Verschwenken der Ausleger 8 relativ zu der Manschette 13 und damit relativ zu dem Leuchtengrundkörper 6 bewirken. Die Verschwenkung erfolgt um eine durch das flexible Gelenk 12 festgelegte, horizontale Schwenkachse. Das Verschwenken führt zu einem Verlagern des dem Leuchtengrundkörper 6 abgewandten Ende 15 der Ausleger 8.

Bei einer Aufwärtsbewegung der Spindelmutter 11 wird ein Auslegerende 15 der Ausleger 8 nach oben und lateral von dem Leuchtengrundkörper 6 weg verlagert. Der durch die Ausleger 8 gebildete Schirm öffnet sich. Bei einer gegenläufigen Bewegung der Spindelmutter 11, also bei einem Verfahren entlang der Gewindespindel 10 nach unten, wird das Auslegerende nach unten und lateral zu dem Leuchtengrundkörper 6 hin bewegt. Der durch die Ausleger 8 gebildete Schirm schließt sich.

Bei den in den Figuren gezeigten Ausführungsbeispielen werden die Ausleger 8 und hierüber die Spindelmutter 11 in Rotation versetzt, um eine Verlagerung zu bewirken. In anderen, nicht dargestellten Ausführungsbeispielen ist der Leuchtengrundkörper 6, zumindest jedoch die Gewindespindel 10, drehbar gelagert. Die Gewindespindel 10 wird mittels des Motors in Rotation versetzt, so dass ein Verschwenken der Ausleger 8, jedoch keine Rotation derselben erfolgt. In wiederum anderen Ausführungsbeispielen erfolgt eine Linearverschiebung mit anderen Lineartrieben. Anstatt eines Spindelantriebs kann beispielsweise ein pneumatischer und/oder hydraulischer Antrieb verwendet werden. Die allgemeine Idee der Verlagerung der Lichtquellen relativ zu der Pflanze ist unabhängig von der hier konkret beschriebenen Verstelleinrichtung 7. Jede andere Verstelleinrichtung, die eine derartige Verlagerung ermöglicht, kann vorgesehen sein.

Die Leuchte 2 weist eine Mehrzahl von Lichtquellen in Form von LEDs 16 auf. Aus Gründen der Übersichtlichkeit sind in den Figuren nur einzelne der LEDs 16 mit Bezugszeichen versehen. Die LEDs 16 sind entlang von flexiblen Substraten 17 angeordnet. Die flexiblen Substrate 17 sind durch flexible Leiterplatten gebildet. Die flexiblen Substrate 17 sind in Form eines Lichtbands ausgeführt. Je Ausleger 8 ist ein Lichtband 17 mit LEDs 16 vorhanden. Die Lichtbänder 17 sind jeweils in Linearführungen 18 der Ausleger 8 geführt. Die Lichtbänder 17 sind entlang der Ausleger 18 geführt verschiebbar.

Ein Ende 19 der Lichtbänder 17 ist an der Spindelmutter 11 befestigt. Bei Verfahren der Spindelmutter 11 entlang der Gewindespindel 10 werden die Enden 19 Lichtbänder 17 mitgenommen. Die Mitnahme der Enden 19 der Lichtbänder 17 bewirkt ein relatives Verschieben der Lichtbänder 17 zu dem jeweiligen Ausleger 8. Mit Hilfe des Drehantriebs wird daher ein Verschwenken der Ausleger 8 und eine relative Linearbewegung der Lichtbänder 17 zu den Auslegern 8 bewirkt. Die Drehbewegung bewirkt ein Verlagern der LEDs 16 relativ zu dem Leuchtengrundkörper 6 und damit relativ zu der aufzuziehenden Pflanze 4.

Die Verstelleinrichtung 7 dient einer Anpassung der Position der LEDs 16 relativ zu der aufzuziehenden Pflanze 4. Durch die Verstelleinrichtung 7 ist die Leuchtengeometrie der Leuchte 2 veränderbar. In den Fig. 1 bzw. 3 bis 5 sind beispielhafte unterschiedliche Leuchtengeometrien der Leuchte 2 gezeigt. Die Verstelleinrichtung 7 ermöglicht eine kontinuierliche Änderung der Leuchtengeometrie. Die unterschiedlichen Leuchtengeometrien werden im Folgenden auch als Verstellzustände bezeichnet. Mit Hilfe des Spindelantriebs 9 ist eine stufenlose Verstellung und Anpassung der Leuchte 2 an die Pflanze 4 möglich.

In Fig. 1 ist eine Verstellzustand gezeigt, bei dem die Ausleger 8 weitestgehend nach unten verschwenkt sind. Die Spindelmutter 11 ist im Bereich des unteren Endes der Gewindespindel 10. Die Lichtbänder 17 erstrecken sich oberhalb der Spindelmutter 11 entlang der Gewindespindel 10. Die Lichtbänder 17 erstrecken sich daher über einen Teil des als Standfuß ausgebildeten Leuchtengrundkörper 6. Die Lichtbänder 17 sind zudem innerhalb der Linearführungen 18 der jeweiligen Ausleger 8 geführt. Die LEDs 16 strahlen daher Licht auf die Pflanze 4 von Seiten des Leuchtengrundkörpers 6 und von oben aus Richtung der Ausleger 8 ein. Aufgrund des nach unten geklappten Zustands wird das Licht auch von der Leuchtengrundkörper gegenüberliegenden Seite auf die Pflanze 4 eingestrahlt. Aufgrund des eingeklappten Verstellzustands wird das mit Hilfe der LEDs 16 erzeugte Licht weitestgehend auf die Pflanze 4 gebündelt. Streulicht ist vermindert. Damit ist die Leuchte energieeffizient. Das mit Hilfe der LEDs 16 erzeugte Licht kann optimal für die Beleuchtung der Pflanze 4 genutzt werden.

Bei dem in den Fig. 3 bis 5 gezeigten Verstellzustand ist die Spindelmutter 11 in Richtung des oberen Endes der Gewindespindel 10 verfahren. Hierdurch sind die Ausleger 8 nach oben verschwenkt. Die Ausleger 8 erstrecken sich in diesem Verstellzustand im Wesentlichen in horizontaler Richtung von dem Leuchtengrundkörper 6 nach außen. Die Ausleger 8 ermöglichen daher eine Überdeckung einer höheren und breiteren Pflanze 4. Gleichzeitig sind die Enden 19 der Lichtbänder 17 im Bereich des oberen Endes der Gewindespindel 10 angeordnet. Die Lichtbänder 17 sind daher relativ zu den Auslegern 8 verschoben. Das dem Ende 19 gegenüberliegende Ende 20 der Lichtbänder 17 ragt daher aus den Linearführungen 18 über das freie Auslegerende 15 der Ausleger 8 hinaus. Am Auslegerende 15 ist ein flexibles Gelenk 21 angeordnet. Durch das flexible Gelenk 21 ist sichergestellt, dass die Auslegerenden 15 der Schwerkraft folgend nach unten hängen. Entsprechend hängen die Lichtbänder 17 seitlich nach unten. Aufgrund dieser Anordnung der Lichtbänder 17 wird die Pflanze 4 von oben und von der dem Leuchtengrundkörper 6 abgewandten Seite beleuchtet.

In den unterschiedlichen Verstellzuständen der Leuchte 2 wird die Pflanze 4 jeweils von mindestens zwei Seiten beleuchtet. Dies erhöht die Lichtausbeute bei der Pflanzenaufzucht. Tieferliegende Blätter werden nicht durch höherliegende Blätter verschattet. Vielmehr erfolgt ein Lichteintrag von verschiedenen Seiten.

Durch die Verstelleinrichtung 7 erfolgt eine Verlagerung der LEDs 16 relativ zu der Pflanze 4. Die Lage der LEDs 16 ist daher an den jeweiligen Zustand der Pflanze 4, insbesondere die Größe der Pflanze 4, optimal anpassbar. Die Verlagerung erfolgt bei der Leuchte 2 vollautomatisch.

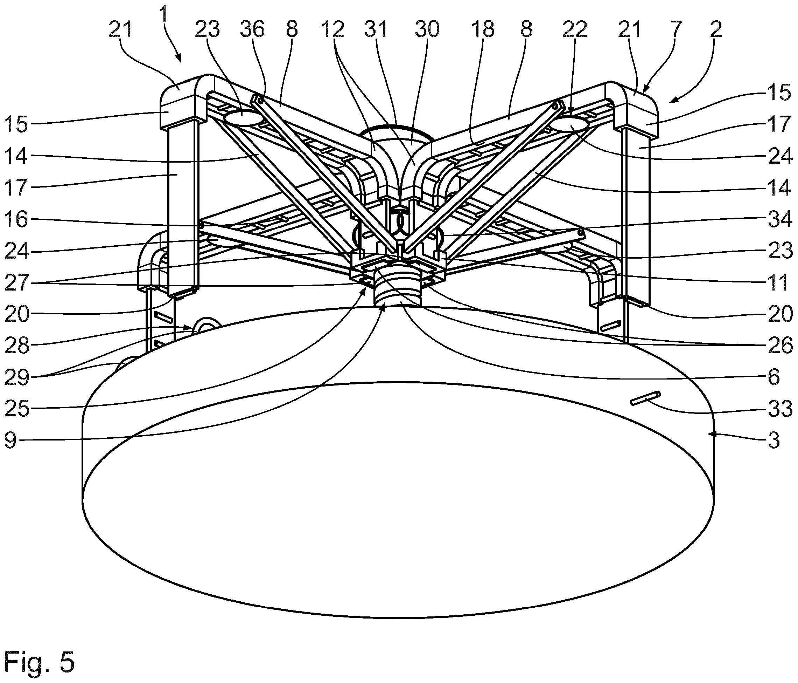

Die Leuchte 2 weist eine Erfassungseinrichtung 22 zur Erfassung eines Zustandsparameters der Pflanze 4 auf (vgl. Fig. 5). Die Erfassungseinrichtung 22 weist NIR-Spektrometer 24 und NIR-Breitbandemitter 23 auf. Die NIR-Breitbandemitter 23 strahlen breitbandige Infrarotstrahlung auf die Pflanze 4 ein. Von der Pflanze 4, insbesondere deren Blattwerk, reflektierte Infrarotstrahlung wird mit Hilfe der NIR-Spektrometer 24 detektiert. Das Spektrum der reflektierten Infrarotstrahlung ermöglicht Rückschlüsse auf das Blattwerk und damit auf die Größe der Pflanze 4. Zudem kann hierüber ein Blattflächenindex ermittelt werden. Aus dem NIR-Spektrum kann zudem ein Wasser- und/oder Nährstoffgehalt der Pflanze 4 bestimmt werden. Diese Zustandsparameter der Pflanze 4 ermöglichen es, einen Wachstumszustand, insbesondere die Größe, und unterschiedliche Vegetationsphasen, insbesondere Wachstumsphasen, zu bestimmen. Abhängig von der Pflanzengröße und/oder der Vegetationsphase, insbesondere Wachstumsphase, wird die Geometrie der Leuchte 2 angepasst, um eine optimale Beleuchtung der Pflanze 4 mit Hilfe der LEDs 16 zu gewährleisten.

Die LEDs 16 sind in ihrer Abstrahlcharakteristik anpassbar. Dies bedeutet, dass Intensität und Spektrum des mittels der LEDs 16 erzeugten Lichts an den jeweiligen mit Hilfe der Erfassungseinrichtung 22 bestimmten Zustandsparameter angepasst wird. Hierdurch ist ein optimales Pflanzenwachstum gewährleistet.

Die Verstelleinrichtung 7 weist eine nicht dargestellte Auswerteeinheit auf, die aus dem NIR-Spektrum den mindestens einen Zustandsparameter, insbesondere die Größe, den Blattflächenindex, den Wassergehalt und/oder den Nährstoffgehalt der Pflanze 4 bestimmt. Abhängig von diesem Zustandsparameter wird die Verstelleinrichtung zur Verlagerung der LEDs 16 relativ zu der Pflanze 4 angesteuert.

Bei dem in den Figuren dargestellten Ausführungsbeispiel sind die NIR-Breitbandemitter 23 in zwei der vier Ausleger 8 auf Höhe der Verbindung zwischen den Kopplungsstangen 14 und dem jeweiligen Ausleger 8 angeordnet. Auf den zwei anderen Auslegern 8 ist jeweils an entsprechender Stelle ein NIR-Spektrometer 24 angeordnet. In anderen, nicht dargestellten Ausführungsbeispielen können je Ausleger 8 ein NIR-Emitter 23 und ein NIR-Spektrometer 24 angeordnet sein.

In anderen, nicht dargestellten Ausführungsbeispielen können zusätzlich oder alternativ zu den NIR-Spektrometern andere Sensoren vorgesehen sein. Beispielsweise können Abstandssensoren zur Bestimmung eines Abstands zwischen den LEDs 16 und der Pflanze 4 verwendet werden. Aus dem ermittelten Abstand und dem Verstellzustand kann beispielsweise auf die Größe der Pflanze geschossen werden. In wiederum anderen Ausführungsbeispielen können die Form und Größe Pflanze 4 mit Hilfe von 3D-Scannern, insbesondere Laserscannern, beispielsweise NIR-Laserscanner, erfasst werden. Besonders bevorzugt weist die Erfassungseinrichtung mindestens ein NIR-Spektrometer und mindestens einen 3D-Scanner auf. In einem bevorzugten Ausführungsbeispiel können auf den Auslegern abwechselnd 3D-Scanner, insbesondere Laserscanner, und NIR-Spektrometer angeordnet sein.

Die Leuchte 2 weist eine Sekundär-Erfassungseinrichtung 25 zur Erfassung mindestens eines weiteren Zustandsparameters der Pflanze 4 auf. Die Sekundär-Erfassungseinrichtung 25 ist an der Unterseite der Spindelmutter 11 angeordnet (vgl. Fig. 5). Die Sekundär-Erfassungseinrichtung 25 weist Temperatursensoren 26 und Feuchtigkeitssensoren 27 auf. Mit Hilfe der Temperatursensoren 26 kann eine Temperatur der Pflanze 4 und/oder deren Umgebung gemessen werden. Die für die Pflanzenaufzucht gewünschte Temperatur ist mittels der Temperatursensoren 26 überwachbar. In einigen Ausführungsbeispielen kann die Temperatur auch steuerbar sein. Hierzu kann das Gefäß 3 eine nicht dargestellte Heizung aufweisen.

Mit Hilfe der Feuchtigkeitssensoren 27 kann eine Luftfeuchtigkeit, Bodenfeuchtigkeit und/oder ein Wassergehalt der Pflanze 4 bestimmt werden. Auf Basis der ermittelten Feuchtigkeitswerte kann eine Bewässerung der Pflanze 4 angepasst werden.

Das Gefäß 3 weist eine automatische Bewässerungsvorrichtung 28 mit Sprinklern 29 auf. Die Vorrichtung 1 ermöglicht eine gezielte Bewässerung der Pflanze 4, insbesondere eine Tröpfchenbewässerung. Die Bewässerung erfolgt automatisch auf Basis der mit Hilfe der Feuchtigkeitssensoren 27 bestimmten Feuchtigkeitswerte und/oder eines mit Hilfe der NIR-Spektrometer 24 bestimmten Wassergehalts der Pflanze 4. Die Bewässerungseinrichtung 28 weist ein Flüssigkeitsreservoir 30 auf. Das Flüssigkeitsreservoir 30 ist innerhalb des Leuchtengrundkörpers 6 ausgebildet. Das Flüssigkeitsreservoir 30 ist über eine mittels einer Klappe 31 verschließbaren Einfüllöffnung 32 befüllbar

Die Vorrichtung 1 weist zudem Düngemittelreservoir 35 auf. Das Düngemittelreservoir ist schematisch in Fig. 4 dargestellt. Das Düngemittelreservoir 35 ermöglicht eine automatische Düngung der Pflanze, insbesondere auf Basis eines mit Hilfe der NIR-Spektrometer 24 ermittelten Nährstoffgehalts der Pflanze 4. In anderen, nicht dargestellten Ausführungsbeispielen kann das Düngemittel auch über das Wasserreservoir und die Bewässerungseinrichtung zugeführt werden.

Die Vorrichtung 1 weist einen in dem Behälter 3 ausgebildeten Stromanschluss 33 auf. Über den Stromanschluss 33 kann die Vorrichtung 1 mit Strom versorgt werden. Zur Versorgung der LEDs 16 mit Strom sind die Lichtbänder 17 an deren Ende 19 an Drahtschleifen 34 angeschlossen. Die Drahtschleifen 34 ermöglichen eine Stromanbindung unabhängig von einer Verlagerung der Enden 19 der Lichtbänder 17 entlang des Spindeltriebs 10. Im Bereich der Manschette 13 erfolgt der Stromanschluss über Schleifkontakte, insbesondere für Masse und/oder Plus-Pol. Ein weiterer optionaler Schleifkontakt dient zur Datenübertragung, insbesondere zur Übertragung der mittels der Erfassungseinrichtungen 22 und/oder der Sekundär-Erfassungseinrichtungen 25 erfassten Daten.

Die Leuchte 2 weist eine nicht explizit gezeigte Datenschnittstelle zum Austausch von Daten auf. Die Datenschnittstelle ist als drahtlose Datenverbindung ausgeführt. In anderen, nicht dargestellten Ausführungsbeispielen kann eine kabelgestützte Datenschnittstelle, beispielsweise über den Stromanschluss 33 erfolgen. Mit Hilfe der Datenschnittstelle können Betriebsparameter und/oder Aufzuchtsdaten bezüglich der Pflanze 4 an die Leuchte 2 übergeben werden. Alternativ oder zusätzlich können Betriebszustände der Leuchte 2 ausgegeben werden. Insbesondere können mit Hilfe der Erfassungseinrichtung 22 und/oder der Sekundär-Erfassungseinrichtung 25 ermittelte Zustandsparameter der Pflanze 4 ausgegeben werden. Beispielsweise kann eine Ausgabe erfolgen, wenn die Pflanze 4 ein neues Wachstumsstadium erreicht hat. Die Datenein- bzw. - ausgabe kann beispielsweise über ein Endgerät des Nutzers, insbesondere ein Smartphone und/oder ein Tablet erfolgen. Beispielsweise kann eine spezielle App hierfür vorgesehen sein.

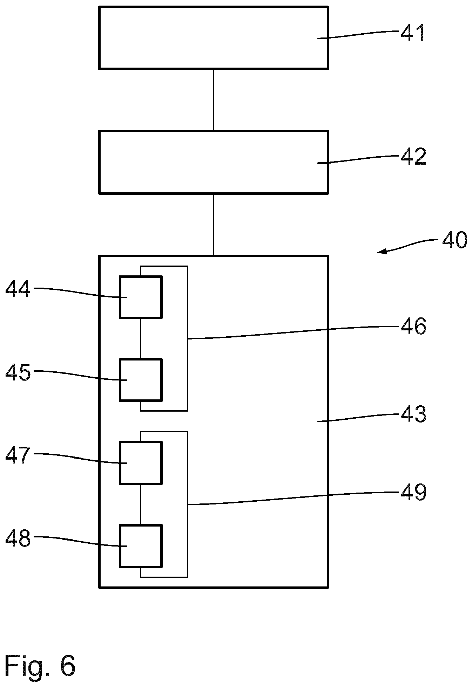

Mit Bezug auf Fig. 6 wird im Folgenden ein Pflanzenaufzuchtsverfahren 40 beschrieben.

In einem Bereitstellungsschritt 41 werden zumindest eine aufzuziehende Pflanze und eine Leuchte für die Pflanzenaufzucht bereitgestellt. Bei der bereitgestellten Leuchte kann es sich um die zuvor beschriebene Leuchte 2 handeln. Bevorzugt wird die Leuchte als Teil der Vorrichtung 1 bereitgestellt.

In einem Kalibrierschritt 42 wird die bereitgestellte Leuchte kalibriert. Beispielsweise können der Leuchte Betriebsparameter und/oder Aufzuchtsdaten, insbesondere der Art oder Gattung der aufzuziehenden Pflanze, übergeben werden. Die Leuchte kann auch eine automatische Erkennung relevanter Betriebsparameter und/oder Aufzuchtsdaten durchführen. Insbesondere können Zustandsparameter der aufzuziehenden Pflanze durch mehrmalige Messung bestimmt werden.

In einem Pflanzenaufzuchtsschritt 43 wird mit Hilfe mindestens einer Lichtquelle der Leuchte Licht auf die mindestens eine aufzuziehende Pflanze eingestrahlt. In dem Pflanzenaufzuchtsschritt 43 erfolgt eine Erfassung mindestens eines Pflanzenparameters in einem Erfassungsschritt 44. Abhängig von dem erfassten Zustandsparameter wird in einem Verstellschritt 45 mit Hilfe einer Verstelleinrichtung der Leuchte die mindestens eine Lichtquelle relativ zu der aufzuziehenden Pflanze verlagert. Hierdurch erfolgt eine zustandsabhängige Anpassung der Geometrie der Leuchte.

Der Erfassungsschritt 44 und der Verstellschritt 45 werden wiederholt durchgeführt, wie dies durch die Wiederholungsschleife 46 angedeutet ist.

Insbesondere kann eine kontinuierliche und/oder schrittweise Anpassung der Leuchtengeometrie erfolgen.

Abhängig von dem mindestens einen im Erfassungsschritt 44 erfassten Zustandsparameter der aufzuziehenden Pflanze erfolgt auch eine Anpassung der Abstrahlcharakteristik, insbesondere des Spektrums und/oder der Intensität, der mindestens einen Lichtquelle. Insbesondere erfolgt eine Anpassung der Abstrahlcharakteristik an eine Vegetationsphase, insbesondere Wachstumsphase, der Pflanze. Die Anpassung kann in dem Verstellschritt 45 erfolgen.

In einem Sekundär-Erfassungsschritt 47 wird mindestens ein weiterer Zustandsparameter der aufzuziehenden Pflanze erfasst. Abhängig von dem weiteren Zustandsparameter erfolgt in einem Anpassungsschritt 48 eine entsprechende Anpassung. Beispielsweise kann in dem Sekundär-Erfassungsschritt 47 ein Wasser- und/oder Nährstoffgehalt der aufzuziehenden Pflanze ermittelt werden. In dem Anpassungsschritt 48 erfolgt dann eine automatisierte Bewässerung und/oder Düngung der Pflanze. Sekundär-Erfassungsschritt 47 und Anpassungsschritt 48 werden zyklisch wiederholt, wie dies durch die Wiederholungsschleife 49 angedeutet ist. Insbesondere können eine kontinuierliche und/oder schrittweise Überwachung und/oder Regelung des Wasserhaushalts und/oder des Nährstoffhaushalts der mindestens einen aufzuziehenden Pflanze erfolgen.

In dem Sekundär-Erfassungsschritt 47 können auch weitere Zustandsparameter, beispielweise eine Umgebungstemperatur, erfasst werden. Abhängig von den weiteren Zustandsparametern kann in dem Anpassungsschritt 48 eine weitere Anpassung, beispielsweise eine Anpassung der Temperatur erfolgen.

## Patentansprüche

1. Leuchte für die Pflanzenaufzucht, aufweisend
- mindestens eine Lichtquelle (16) zur Erzeugung von Licht für die Aufzucht mindestens einer aufzuziehenden Pflanze (4),
- mindestens eine Erfassungseinrichtung (22) zur Erfassung mindestens eines Zustandsparameters der mindestens einen aufzuziehenden Pflanze (4) und
- mindestens eine Verstelleinrichtung (7) zur Verlagerung der mindestens einen Lichtquelle (16) relativ zu der mindestens einen aufzuziehenden Pflanze (4) in Abhängigkeit von dem durch die mindestens eine Erfassungseinrichtung (22) erfassten mindestens einen Zustandsparameter,
- wobei die mindestens eine Verstelleinrichtung (7) mindestens einen gegenüber einem Leuchtengrundkörper (6) schwenkbar gelagerten Ausleger (8) aufweist,
**dadurch gekennzeichnet**
- **dass** die mindestens eine Lichtquelle (16) entlang des mindestens einen Auslegers (8) verlagerbar ist.

2. Leuchte nach Anspruch 1, wobei der mindestens eine Ausleger (8) über ein Kopplungselement (14) an einen Linearantrieb, insbesondere an eine Spindelmutter (11) eines Spindelantriebs (9), der mindestens einen Verstelleinrichtung (7) gekoppelt ist.

3. Leuchte nach mindestens einem der Ansprüche 1 oder 2, wobei die mindestens eine Lichtquelle (16) entlang des mindestens einen Auslegers (8) geführt verlagerbar ist.

4. Leuchte nach mindestens einem der Ansprüche 1 bis 3, wobei die mindestens einen Lichtquelle (16) an einen Linearantrieb der mindestens einen Verstelleinrichtung (7), insbesondere an eine Spindelmutter (11) eines Spindelantriebs (9), gekoppelt ist.

5. Leuchte nach mindestens einem der vorgenannten Ansprüche, wobei die mindestens eine Lichtquelle (16) an mindestens einem flexiblen Substrat (17) angeordnet ist.

6. Leuchte nach Anspruch 5, wobei das mindestens eine flexible Substrat (17) entlang mindestens eines Auslegers (8) der mindestens einen Verstelleinrichtung (7) verlagerbar, insbesondere geführt verlagerbar, ist.

7. Leuchte nach mindestens einem der Ansprüche 5 oder 6, wobei das mindestens eine flexible Substrat (17) mit einem Linearantrieb der mindestens einen Verstelleinrichtung (7), insbesondere mit einer Spindelmutter (11) eines Spindelantriebs (9), gekoppelt ist.

8. Leuchte nach mindestens einem der vorgenannten Ansprüche, wobei die mindestens eine Erfassungseinrichtung (22) mindestens ein Spektrometer, insbesondere mindestens ein NIR-Spektrometer (24), mindestens einen Abstandssensor und/oder mindestens einen 3D-Scanner aufweist.

9. Leuchte nach mindestens einem der vorgenannten Ansprüche, die mindestens eine Sekundär-Erfassungseinrichtung (25) zur Erfassung mindestens eines weiteren Zustandsparameters der mindestens einen aufzuziehenden Pflanze (4) aufweist.

10. Vorrichtung für die Pflanzenaufzucht, aufweisend
- mindestens eine Leuchte (2) nach mindestens einem der vorgenannten Ansprüche und
- mindestens ein Gefäß (3) zur Aufnahme mindestens eines Pflanzensubstrats (5).

11. Verfahren zur Pflanzenaufzucht, mit den folgenden Schritten
- Bereitstellen mindestens einer aufzuziehenden Pflanze (4),
- Bereitstellen einer Leuchte (2) nach mindestens einem der Ansprüche 1 bis 9,
- Einstrahlen von Licht auf die mindestens eine aufzuziehende Pflanze (4) mittels der mindestens einen Lichtquelle (16),
- Erfassen mindestens eines Zustandsparameters der mindestens einen aufzuziehenden Pflanze (4) mittels der mindestens einen Erfassungseinrichtung (22) und
- Verlagern der mindestens einen Lichtquelle (16) relativ zu der mindestens einen aufzuziehenden Pflanze (4) in Abhängigkeit von dem mindestens einen Zustandsparameter mittels der mindestens einen Verstelleinrichtung (7).

12. Verfahren nach Anspruch 11, wobei mindestens ein zusätzlicher Zustandsparameter der mindestens einen aufzuziehenden Pflanze (4), insbesondere deren Wassergehalts und/oder Nährstoffgehalts, ermittelt wird.

13. Verfahren nach mindestens einem der Ansprüche 11 oder 12, der einen Kalibrierschritt (42) zur Bestimmung einer Startkonfiguration der Leuchte (2), insbesondere einer Position und/oder einer Abstrahlcharakteristik der mindestens einen Lichtquelle (16), zu Beginn der Pflanzenaufzucht umfasst.

14. Verfahren nach mindestens einem der Ansprüche 11 bis 13, wobei die Verlagerung der mindestens einen Lichtquelle (16) in mindestens zwei, insbesondere in mindestens drei, Freiheitsgraden erfolgt.

15. Verfahren nach Anspruch 14, wobei die Verlagerung in unterschiedlichen Freiheitsgraden gekoppelt erfolgt, insbesondere durch einen einzigen Antrieb.

## Claims

1. A light for growing plants, including
- at least one light source (16) for generating light for growing at least one plant (4) to be grown,
- at least one detection device (22) for detecting at least one state parameter of the at least one plant (4) to be grown, and
- at least one adjustment device (7) for moving the at least one light source (16) relative to the at least one plant (4) to be grown depending on the at least one state parameter detected by the at least one detection device (22),
- wherein the at least one adjustment device (7) includes at least one boom (8) pivotably mounted in relation to a light base body (6),
**characterized in**
- **that** the at least one light source (16) is movable along the at least one boom (8).

2. The light as claimed in claim 1, wherein the at least one boom (8) is coupled via a coupling element (14) to a linear drive, in particular to a spindle nut (11) of a spindle drive (9), of the at least one adjustment device (7).

3. The light as claimed in at least one of claims 1 or 2, wherein the at least one light source (16) is movable, in particular movable in a guided manner, along the at least one boom (8).

4. The light as claimed in at least one of claims 1 to 3, wherein the at least one light source (16) is coupled to a linear drive of the at least one adjustment device (7), in particular to a spindle nut (11) of a spindle drive (9).

5. The light as claimed in at least one of the preceding claims, wherein the at least one light source (16) is arranged on at least one flexible substrate (17).

6. The light as claimed in claim 5, wherein the at least one flexible substrate (17) is movable, in particular movable in a guided manner, along at least one boom (8) of the at least one adjustment device (7).

7. The light as claimed in at least one of claims 5 or 6, wherein the at least one flexible substrate (17) is coupled to a linear drive of the at least one adjustment device (7), in particular to a spindle nut (11) of a spindle drive (9).

8. The light as claimed in at least one of the preceding claims, wherein at least two light sources (16), wherein the at least one detection device (22) includes at least one spectrometer, in particular at least one NIR spectrometer (24), at least one distance sensor, and/or at least one 3D scanner.

9. The light as claimed in at least one of the preceding claims, which includes at least one secondary detection device (25) for detecting at least one further state parameter of the at least one plant (4) to be grown.

10. An apparatus for growing plants, including
- at least one light (2) as claimed in at least one of the preceding claims and
- at least one vessel (3) for accommodating at least one plant substrate (5).

11. A method for growing plants, comprising the following steps
- providing at least one plant (4) to be grown,
- providing a light (2) as claimed in at least one of claims 1 to 9,
- irradiating light onto the at least one plant (4) to be grown by means of the at least one light source (16),
- detecting at least one state parameter of the at least one plant (4) to be grown by means of the at least one detection device (22), and
- moving the at least one light source (16) relative to the at least one plant (4) to be grown depending on the at least one state parameter by means of the at least one adjustment device (7).

12. The method as claimed in claim 11, wherein at least one additional state parameter of the at least one plant (4) to be grown, in particular its water content and/or nutrient content, is ascertained.

13. The method as claimed in at least one of claims 11 or 12, which comprises a calibration step (42) for determining a starting configuration of the light (2), in particular a position and/or an emission characteristic of the at least one light source (16), at the beginning of growing the plants.

14. The method as claimed in at least one of claims 11 to 13, wherein the movement of the at least one light source (16) takes place in at least two, in particular in at least three degrees of freedom.

15. The method as claimed in claim 14, wherein the movement in different degrees of freedom takes place in a coupled manner, in particular by a single drive.

## Revendications

1. Lampe de culture de plantes, comprenant
- au moins une source de lumière (16) pour produire de la lumière pour la culture d'au moins une plante (4) à cultiver,
- au moins un dispositif de détection (22) pour détecter au moins un paramètre d'état de l'au moins une plante (4) à cultiver et
- au moins un dispositif de réglage (7) pour déplacer ladite au moins une source de lumière (16) par rapport à ladite au moins une plante (4) à cultiver en fonction dudit au moins un paramètre d'état détecté par ledit au moins un dispositif de détection (22),
- dans laquelle ledit au moins un dispositif de réglage (7) présente au moins un bras (8) logé de manière pivotante par rapport à un corps de base de lampe (6)
**caractérisée en ce**
- **que** ladite au moins une source de lumière (16) peut être déplacée le long dudit au moins un bras (8).

2. Lampe selon la revendication 1, dans laquelle ledit au moins un bras (8) est couplé par un élément de couplage (14) à un entraînement linéaire, en particulier à un écrou de broche (11) d'un entraînement de broche (9), dudit au moins un dispositif de réglage (7).

3. Lampe selon au moins l'une quelconque des revendications 1 ou 2, dans laquelle ladite au moins une source de lumière (16) peut être déplacée de manière guidée le long dudit au moins un bras (8).

4. Lampe selon au moins l'une quelconque des revendications 1 à 3, dans laquelle ladite au moins une source de lumière (16) est couplée à un entraînement linéaire dudit au moins un dispositif de réglage (7), en particulier à un écrou de broche (11) d'un entraînement de broche (9).

5. Lampe selon au moins l'une quelconque des revendications précédentes, dans laquelle ladite au moins une source de lumière (16) est disposée sur au moins un substrat flexible (17).

6. Lampe selon la revendication 5, dans laquelle ledit au moins un substrat flexible (17) peut être déplacé, en particulier de manière guidée, le long dudit au moins un bras (8) dudit au moins un dispositif de réglage (7).

7. Lampe selon au moins l'une quelconque des revendications 5 ou 6, dans laquelle ledit au moins un substrat flexible (17) est couplé à un entraînement linéaire dudit au moins un dispositif de réglage (7), en particulier à un écrou de broche (11) d'un entraînement de broche (9).

8. Lampe selon au moins l'une quelconque des revendications précédentes, dans laquelle ledit au moins un dispositif de détection (22) présente au moins un spectromètre, en particulier au moins un spectromètre NIR (24), au moins un capteur de distance et/ou au moins un scanner 3D.

9. Lampe selon au moins l'une quelconque des revendications précédentes, qui présente au moins un dispositif de détection secondaire (25) pour détecter au moins un autre paramètre d'état de l'au moins une plante (4) à enfiler.

10. Appareil de culture de plantes, comprenant
- au moins une lampe (2) selon au moins l'une quelconque des revendications précédentes et
- au moins un récipient (3) destiné à recevoir au moins un substrat végétal (5).

11. Procédé de culture de plantes, comprenant les étapes suivantes
- mise à disposition d'au moins une plante à cultiver (4),
- mise à disposition d'une lampe (2) selon au moins l'une quelconque des revendications 1 à 9,
- émission de lumière sur ladite au moins une plante (4) à cultiver au moyen de ladite au moins une source de lumière (16),
- détection d'au moins un paramètre d'état de ladite au moins une plante (4) à cultiver au moyen dudit au moins un dispositif de détection (22) et
- déplacement de ladite au moins une source de lumière (16) par rapport à ladite au moins une plante (4) à cultiver en fonction dudit au moins un paramètre d'état au moyen dudit au moins un dispositif de déplacement (7).

12. Procédé selon la revendication 11, dans lequel au moins un paramètre d'état supplémentaire de ladite au moins une plante (4) à cultiver, en particulier sa teneur en eau et/ou sa teneur en substances nutritives, est déterminé.

13. Procédé selon au moins l'une quelconque des revendications 11 ou 12, comprenant une étape de calibrage (42) pour déterminer une configuration de départ de la lampe (2), en particulier une position et/ou une caractéristique de rayonnement de ladite au moins une source de lumière (16), au début de la culture des plantes.

14. Procédé selon au moins l'une quelconque des revendications 11 à 13, dans lequel le déplacement de ladite au moins une source de lumière (16) s'effectue selon au moins deux degrés de liberté, en particulier selon au moins trois degrés de liberté.

15. Procédé selon la revendication 14, dans lequel le déplacement est effectué de manière couplée selon différents degrés de liberté, en particulier par un seul entraînement.
